# EUROPEAN PATENT APPLICATION

(11) **EP 4 574 220 A1**
(43) Date of publication of application: **25.06.2025**
(21) Application number: 23855108.9
(22) Date of filing: 11.08.2023
(51) Int. Cl.: A62C 35/10, A62C 35/02, A62C 3/16, A62C 31/02, A62C 99/00, H01M 50/24

(54) **PLATE-TYPE FIRE EXTINGUISHING DEVICE AND BATTERY MODULE INCLUDING SAME**

(30) Priority: 17.08.2022 KR 20220102861
(71) Applicant: HTC Co., Ltd, Ansan-si Gyeonggi-do 15421 (KR)
(72) Inventor: PARK, Sang Ku, Siheung-si Gyeonggi-do 14963 (KR); KIM, Byung Soo, Incheon 22535 (KR); KWON, Jae Sung, Yongin-si Gyeonggi-do 17003 (KR); NAM, Sang Kyu, Seoul 04769 (KR)
(74) Representative: Cabinet Chaillot
(86) International application number: PCT/KR2023/011919
(87) International publication number: WO 2024/039141

(57) **Abstract**

A plate-type fire extinguishing device (100) of the present invention is configured to spray, in case of a fire in a battery, a built-in fire extinguishing agent onto the area where the fire occurred, thereby extinguishing the fire. The plate-type extinguishing device (100) comprises: an exterior means (110) comprising a chamber which is sealed to have an interior space having a predetermined capacity and is formed in the shape of a plate with a predetermined width; a predetermined amount of extinguishing agent (not shown) that fills the interior space of the chamber at a predetermined discharge pressure; and multiple nozzles (120) coupled to the exterior means and communicating with the interior space of the chamber in an upward and/or downward direction; and multiple sealing covers (130) made of a low melting point alloy so as to fill and seal the insides of the multiple nozzles (120), respectively, and, when heated to a predetermined temperature by a battery, melt to allow the extinguishing agent to be sprayed to the battery through the nozzles (120).

## Description

### Technical Field

The present disclosure relates to a fire extinguishing device. More particularly, the present disclosure relates to a plate-type fire extinguishing device having an inner portion provided with a predetermined amount of fire extinguishing agent with a predetermined pressure embedded as a plate shape, the plate-type fire extinguishing device being disposed such that the plate-type fire extinguishing device is brought into contact with a battery or is positioned adjacent to the battery, and the plate-type fire extinguishing device being configured to spray the embedded fire extinguishing agent onto an area where a fire occurs when the fire occurs in the battery, thereby extinguishing the fire. In addition, the present disclosure relates to a battery module provided with the plate-type fire extinguishing device described above.

### Background Art

Recently, electric vehicles using a battery are rapidly increasing in number. Meanwhile, a battery fire often occurs, and the occurrence of a fire due to a spark, a short circuit, and so on is a situation in which the occurrence of the fire is almost impossible to predict. Therefore, preparation for a fire is required.

A battery for an electric vehicle is configured such that multiple battery modules to which a plurality of battery cells is connected are mounted, but there is a problem that a fire is rapidly propagated to other connected battery cells or battery modules even when the fire occurs in one battery cell.

Meanwhile, an Energy Storage System (ESS) refers to a storage device which stores excessively generated electric power from a power plant and which is configured to transmit electric power in a situation in which electric power is temporarily insufficient. Recently, there has been an increasing trend of configuring a large-scale ESS device into a smaller unit for use in buildings, factories, and households as backup power sources for power outages or for reducing peak power demand.

Recently, as interest in new and renewable energy has rapidly increased due to an imbalance in power supply and demand, a technology for storing and utilizing electricity generated by using new and renewable energy through an ESS is continuously being developed.

Particularly, the ESS market continues to grow as the installation of the ESS in newly constructed public buildings has become mandatory and the installation of the ESS in private buildings has increased for energy savings.

When the ESS is installed in buildings, a battery storing energy, a BMS managing the battery, a PCS converting electric power, and so on are accommodated in a battery rack (a battery module), and such a battery rack is accommodated and operated in a designated space such as a basement and so on.

Generally, a secondary battery is capable of being recharged and reused. Recently, a lithium-ion battery having high charging and discharging efficiency has been widely used. Since the lithium-ion battery has a relatively small volume and has high charging and discharging efficiency, the use of the lithium-ion battery is increasing not only for an electric vehicle and an ESS as described above, but also for a power plant, a charging station, and a mobile device.

However, in the lithium-ion battery, since a thin separator is mounted between a negative electrode material and a positive electrode material, the separator is damaged by impact, or a fire occurs when a short circuit occurs between the negative electrode material and the positive electrode material due to aging and the growth of dendrites. In a large-sized facility, there is a problem that significant financial damage occurs.

### [Document of Related Art]

### [Patent Document]

Korean Patent Application Publication No. 10-2021-0106063
Korean Patent No. 10-2123685
Korean Patent No. 10-2185759

### Disclosure

### Technical Problem

Accordingly, the present disclosure has been made keeping in mind the above problems occurring in the related art, and an objective of the present disclosure is to provide a plate-type fire extinguishing device and a battery module including the plate-type fire extinguishing device, the plate-type fire extinguishing device having an inner portion provided with a predetermined amount of fire extinguishing agent with a predetermined pressure embedded as a plate shape, the plate-type fire extinguishing device being disposed such that the plate-type fire extinguishing device is brought into contact with a battery or is positioned adjacent to the battery, and the plate-type fire extinguishing device being configured to spray the embedded fire extinguishing agent onto an area where a fire occurs since an outlet of each of a plurality of nozzles is opened due to heat when the fire occurs in the battery, thereby extinguishing the fire.

### Technical Solution

In order to achieve the objective described above, according to the present disclosure, there is provided a plate-type fire extinguishing device capable of extinguishing a fire by spraying a fire extinguishing agent onto an area where a fire occurs when a fire occurs in a battery, the plate-type fire extinguishing device including: an exterior means having at least one chamber which is sealed such that the chamber has an interior space having a predetermined capacity and which is formed in a plate shape having a predetermined width; the fire extinguishing agent with a predetermined amount filled in the interior space of the chamber at a predetermined pressure; a plurality of nozzles formed integrally with the exterior means or disposed and coupled to the exterior means so that the plurality of nozzles is in communication with the interior space of the chamber in at least one direction; and a plurality of sealing covers which is formed of a fusible alloy filled inside the plurality of nozzles so as to seal the plurality of nozzles and which is configured to be melted at a predetermined temperature due to the fire that occurs in the battery, thereby allowing the fire extinguishing agent to be sprayed onto the battery through the plurality of nozzles, wherein the fusible alloy is configured such that the fire extinguishing agent is discharged at a predetermined discharge pressure through the nozzles that are first molten, thereby extinguishing the fire.

In addition, according to the present disclosure, it is preferable that the exterior means includes an upper plate and a lower plate which are respectively formed along borders thereof and which are welded and coupled to each other along the borders thereof, thereby forming the interior space with the predetermined capacity, wherein it is preferable that the upper and lower plates are respectively provided with a plurality of forming parts that are formed such that the forming parts protrude inwardly so that the forming parts are brought into surface contact with each other when the upper and lower plates are brought into close contact with each other, wherein it is preferable that the lower plate is further provided with a plurality of holes which is respectively in communication with an outlet of each of the plurality of nozzles or into which a body of each of the plurality of nozzles is respectively inserted thereinto and is capable of being fixed thereto, and wherein it is preferable that a tap or a tapered inclined surface is formed in an inner side surface of the outlet of each of the plurality of nozzles, so that the plurality of sealing covers which is in a solid state and which seals the outlet of each of the plurality of nozzles is prevented from being separated from the outlet due to the discharge pressure of the fire extinguishing agent.

In addition, according to the present disclosure, it is preferable that when the plurality of holes is configured such that the plurality of holes is respectively in communication with the outlet of each of the plurality of nozzles, a plurality of accommodating grooves is further provided around the plurality of holes so that an end portion of each of the plurality of nozzles is coupled to the plurality of holes while the plurality of nozzles is in a state in which the plurality of nozzles is fitted to the plurality of holes.

In addition, according to the present disclosure, it is preferable that the body of each of the plurality of nozzles has a stepped shape so that the body of each of the plurality of nozzles is welded and coupled to the plurality of holes while being in a close contact with a circumference of each of the plurality of holes in a state in which the body of each of the plurality of nozzles is fitted to the plurality of holes.

In addition, according to the present disclosure, it is preferable that the exterior means includes an upper plate and a lower plate which are respectively formed along borders thereof and which are welded and coupled to each other along the borders thereof, thereby forming the interior space with the predetermined capacity, wherein it is preferable that the upper and lower plates are respectively provided with a plurality of forming parts that are formed such that the forming parts protrude inwardly so that the forming parts are brought into surface contact with each other when the upper and lower plates are brought into close contact with each other, wherein it is preferable that each of the plurality of nozzles is formed as an integrated part of the lower plate by forming holes in the lower plate in a state in which a portion of the lower plate further protrudes outwardly, and wherein it is preferable that a coupling force between the plurality of sealing covers formed of the fusible alloy and an inner surface of each of the plurality of nozzles is further reinforced by processing a thread tap in the inner surface of each of the plurality of nozzles.

In addition, according to the present disclosure, the predetermined discharge pressure of the fire extinguishing agent may be formed by filling the interior space of the chamber with compressed air or nitrogen gas.

In addition, according to the present disclosure, the plate-type fire extinguishing device may be further provided with a pressure gauge configured to measure an internal pressure of the chamber, or may be configured such that the plate-type fire extinguishing device is used by being connected to a tank in which a separate fire extinguishing agent is stored.

In addition, according to the present disclosure, it is more preferable that the fire extinguishing agent is fluorinated ketone (C₆F₁₂O) or fluorine-based ketone (FK-5-1-12, dodecafluoro-2-methylpentan-3-one), and it is more preferable that the discharge pressure of the fire extinguishing agent is 5 kg/cm² to 15 kg/cm².

In addition, according to the present disclosure, it is preferable that the fusible alloy is melted at 60 degrees Celsius to 130 degrees Celsius.

In addition, according to the present disclosure, the exterior means may have a plurality of chambers having respective interior spaces that are sealed and partitioned from each other.

In addition, in order to achieve the objective described above, according to the present disclosure, there is provided a battery module which includes a battery provided with a plurality of battery cells stacked on each other and which includes a casing formed such that the casing surrounds at least a portion of an outer surface of the battery, the battery module including: the plate-type fire extinguishing device described above, the plate-type fire extinguishing device being disposed in a form in which the plate-type fire extinguishing device is brought into contact with the battery or is positioned adjacent to the battery.

In addition, according to the present disclosure, the casing may include a casing body in which the battery is capable of being accommodated and which has a first side thereof opened, may include a casing cover configured to open and close the open first side of the casing body, and the casing cover may be configured as the plate-type fire extinguishing device.

### Advantageous Effects

As the plate-type fire extinguishing device of the present disclosure is formed in the plate shape, the plate-type fire extinguishing device of the present disclosure is capable of being conveniently applied to the battery. Furthermore, when the temperature of the battery is increased due to the occurrence of a fire in the battery, the temperature of the plurality of nozzles at a region positioned closest to the battery where the fire occurs increases, the fusible alloy that has been sealing the outlet of each of the plurality of nozzles is melted and the outlet of each of the plurality of corresponding nozzles is opened, and the fire extinguishing agent embedded in the interior space of the chamber is sprayed toward the battery through the open outlet with the predetermined discharge pressure, so that the initial fire of the battery where the fire occurs is capable of being easily extinguished.

### Description of Drawings

FIG. 1 is a perspective view illustrating a plate-type fire extinguishing device according to an embodiment of the present disclosure,
FIG. 2 is a plan view illustrating the plate-type fire extinguishing device illustrated in FIG. 1,
FIG. 3 and FIG. 4 are cross-sectional views illustrating the plate-type fire extinguishing device in FIG. 2 taken along line A-A and line B-B, respectively,
FIG. 5 is a bottom view illustrating the plate-type fire extinguishing device in FIG. 1,
FIG. 6 is an enlarged cross-sectional view illustrating the C part illustrated in FIG. 4, and
FIG. 7 to FIG. 9 are cross-sectional views illustrating modification examples of the C part illustrated in FIG. 4.

### Mode for Invention

A plate-type fire extinguishing device according to the present disclosure is disposed in a form in which the plate-type fire extinguishing device is in contact with or positioned adjacent to a battery of such as an electric vehicle, an Energy Storage System (ESS), and so on, and is used for extinguishing a fire when a fire occurs in the battery.

Hereinafter, an exemplary embodiment of the plate-type fire extinguishing device according to the present disclosure will be described in detail with reference to the accompanying drawings. The present disclosure is not limited to the embodiments disclosed below, but may be implemented in various different forms. The present embodiments are provided so that the present disclosure will be thorough and complete, and will fully convey the scope of the present disclosure to those skilled in the art.

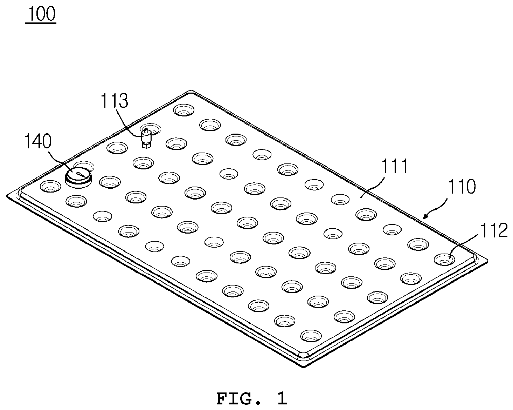

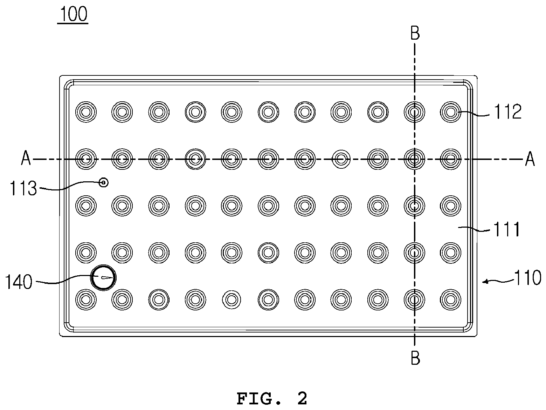

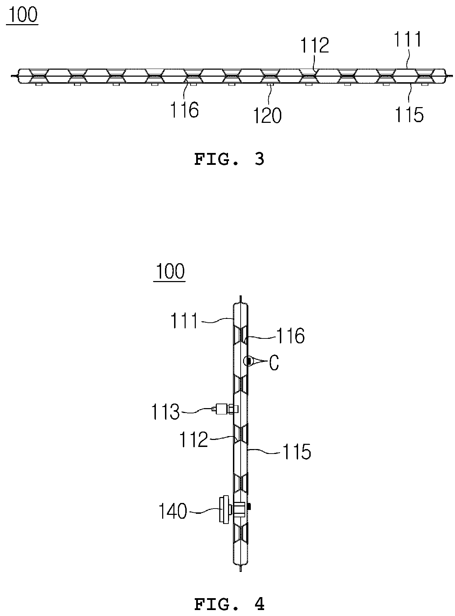

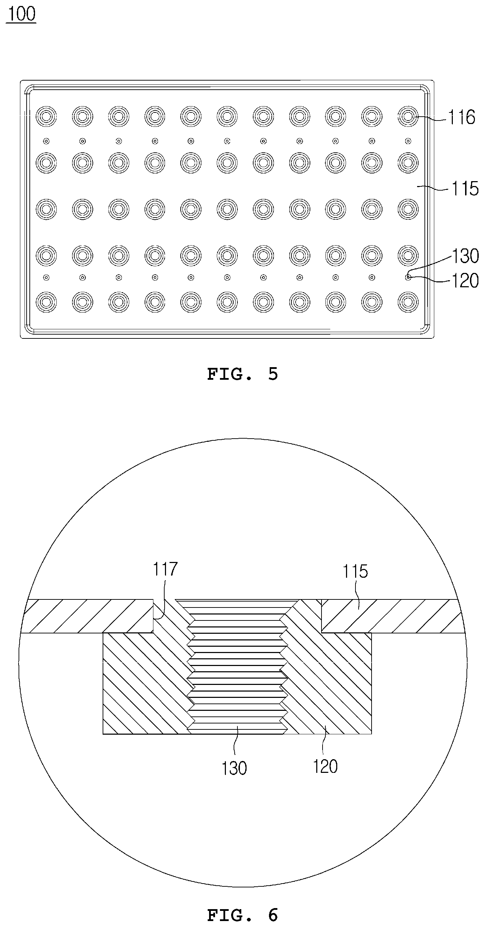

FIG. 1 is a perspective view illustrating a plate-type fire extinguishing device according to an embodiment of the present disclosure, FIG. 2 is a plan view illustrating the plate-type fire extinguishing device illustrated in FIG. 1, and FIG. 3 and FIG. 4 are cross-sectional views illustrating the plate-type fire extinguishing device in FIG. 2 taken along line A-A and line B-B, respectively. In addition, FIG. 5 is a bottom view illustrating the plate-type fire extinguishing device in FIG. 1, FIG. 6 is an enlarged cross-sectional view illustrating the C part illustrated in FIG. 4, and FIG. 7 to FIG. 9 are cross-sectional views illustrating modification examples of the C part illustrated in FIG. 4.

As illustrated in FIG. 1 to FIG. 6, a plate-type fire extinguishing device 100 according to the embodiment of the present embodiment is configured to extinguish a fire by spraying a built-in fire extinguishing agent onto an area where a fire occurs when a fire occurs in a battery. The plate-type fire extinguishing device 100 includes: an exterior means 110 having a chamber which is sealed so as to have an interior space having a predetermined capacity and which is formed in a plate shape with a predetermined width; a fire extinguishing agent (not shown) filled in the interior space of the chamber to a predetermined amount and a predetermined discharge pressure; a plurality of nozzles 120 coupled to the exterior means 110 so that the plurality of nozzles 120 is in communication with the interior space of the chamber in an upward and/or downward direction; and a plurality of sealing covers 130 which is formed of a low melting point alloy (a fusible alloy), the plurality of sealing covers 130 being configured such that the plurality of sealing covers 130 is filled and seals insides of the plurality of nozzles 120 and then is melt when the plurality of sealing covers 130 is heated to a temperature equal to or more than a predetermined temperature by the battery so that the fire extinguishing agent is sprayed onto the battery through the plurality of nozzles 120.

The exterior means 110 serves as a frame constituting an external appearance of the plate-type fire extinguishing device, and includes an upper plate 111 and a lower plate 115 which are respectively formed along borders thereof and which are welded to each other along the borders thereof so that a predetermined interior space is formed therein. The upper and lower plates 111 and 115 of this embodiment are formed of a stainless steel material, such as an STS 304 material, and it is preferable that the upper and lower plates 111 and 115 are formed as thin plates of about 0.5 t to 1 t considering a space of a battery module (including a battery rack) in which the battery is mounted.

Meanwhile, as illustrated in FIG. 3 and FIG. 4, the upper plate 111 and the lower plate 115 are configured such that the upper plate 111 and the lower plate 115 respectively have a plurality of forming parts 112 and 116 formed such that the plurality of forming parts 112 and 116 protrude inwardly. Here, the upper and lower plates 111 and 115 are configured such that the upper and lower plates 111 and 115 respectively have the same forming parts 112 and 116. Therefore, when the upper plate 111 and the lower plate 115 are brought into close contact with each other, end portions of the forming parts 112 and 116 are brought into surface contact with each other.

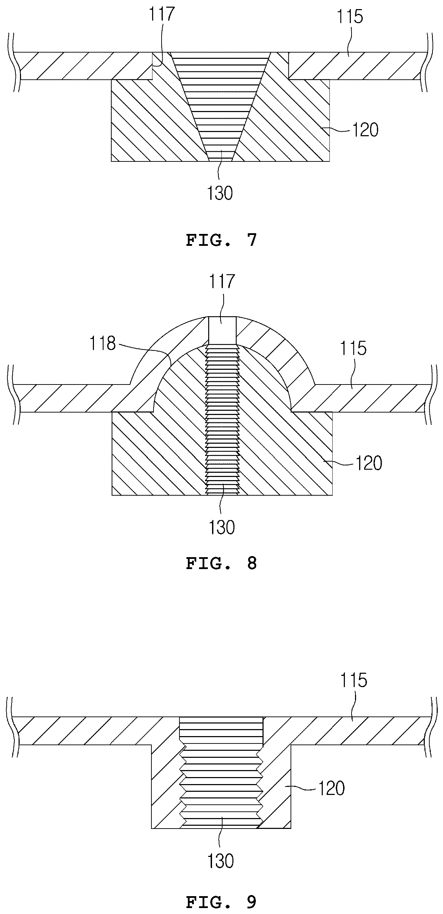

In addition, as illustrated in FIG. 6 to FIG. 8, the lower plate 115 has a plurality of holes 117 which is respectively in communication with an outlet of each of the plurality of nozzles 120 or into which a body of each of the plurality of nozzles 120 is inserted and is capable of being fixed thereto. Here, the plurality of forming parts 112 and 116 may be formed by performing a general forming process on a stainless steel thin plate, and the plurality of holes 117 is formed by performing a punching process. Meanwhile, as illustrated in FIG. 8, when the plurality of holes 117 is configured such that the plurality of holes 117 is in communication with the outlet of each of the plurality of nozzles 120, it is preferable that a plurality of accommodating grooves 118 is provided around the plurality of holes 117 so that the plurality of nozzles 120 is coupled to the plurality of holes 117 in a state in which an end portion of each of the plurality of nozzles 120 is fitted to the plurality of holes 117 from outside. Here, the plurality of accommodating grooves 118 is formed by performing a general forming process, and the plurality of holes 117 is formed by performing a punching process on a center region of each of the plurality of accommodating grooves 118 as described above.

Meanwhile, as illustrated in FIG. 6 and FIG. 7, in inserting and fixing the body of each of the plurality of nozzles 120 into the holes 117, welding coupling is performed so as to fix the plurality of nozzles 120 in a state in which the body of each of the plurality of nozzles 120 is fitted and inserted into the plurality of holes 117. At this time, it is preferable that the body of each of the plurality of nozzles 120 has a stepped shape so that the body each of the plurality of nozzles 120 is capable of being in close contact with a circumference of each of the plurality of holes 117 in the state in which the body of each of the plurality of nozzles 120 is fitted to the plurality of holes 117. That is, each stepped portion is brought into close contact with a circumferential surface of each of the plurality of holes 117, and such a portion that is in close contact is welded and fixed.

However, as illustrated in FIG. 8, when the outlet of each of the plurality of nozzles 120 is fixed in a state in which the outlet of each of the plurality of nozzles 120 is in communication with the plurality of nozzles 117, welding coupling is performed in a state in which the plurality of nozzles 120 is fitted to the plurality of accommodating grooves 118. At this time, the welding coupling is performed in a state in which the outlet of each of the plurality of nozzles 120 is in communication with the plurality of holes 117 formed in a center of each of the plurality of accommodating grooves 118 and also the end portion of each of the plurality of nozzles 120 is brought into close contact with the plurality of accommodating grooves 118 at the circumference of each of the plurality of holes 117.

In addition, the plurality of sealing covers 130 configured to seal the outlet of each of the plurality of nozzles 120 is formed as the outlet of each of the plurality of nozzles 120 is filled with the molten fusible alloy and then the molten fusible alloy is coagulated. Here, the plurality of sealing covers 130 is formed of the fusible alloy that is melted at a temperature equal to or more than a predetermined temperature, and may be formed by mixing components such as bismuth, lead, tin, indium, cadmium, gallium, and so on. Meanwhile, as the fusible alloy of this embodiment, it is preferable to use a material that melts at 60 degrees Celsius to 130 degrees Celsius. That is, in this embodiment, the fusible alloy is melted and the outlet of each of the plurality of nozzles 120 is opened when a fire occurs in the battery and the temperature of the battery is increased to 60 degrees Celsius to 130 degrees Celsius.

In this embodiment, the plurality of nozzles 120 and the plurality of sealing covers 130 are provided only in the lower plate 115. However, as required, the upper plate 111 may be provided with the plurality of nozzles 120 and the plurality of sealing covers 130 in the same concept as the lower plate 115.

The plate-type fire extinguishing device 100 of this embodiment has a shape in which a predetermined amount of fire extinguishing agent is filled in the interior space of the chamber at a predetermined discharge pressure. Therefore, the plurality of sealing covers 130 that have been sealing the outlet of each of the plurality of nozzles 120 is required to be not separated from the outlet by the discharge pressure of the fire extinguishing agent unless the fusible alloy that constitutes the plurality of sealing covers 130 is melted by external heat due to a fire and so on. Therefore, it is preferable that an inner side surface of the outlet of each of the plurality of nozzles 120 is configured such that the inner side surface of the outlet of each of the plurality of nozzles 120 has a tap (see FIG. 6) such as a thread or has an inclined surface (see FIG. 7) that is tapered. Meanwhile, in the tapered inclined surface as illustrated in FIG. 7, the tapered inclined surface is configured such that an inner side surface of the tapered inclined surface on which the discharge pressure of the fire extinguishing agent is applied is the widest and becomes narrow toward an outer side surface thereof.

Meanwhile, in the embodiment described above, the plurality of nozzles 120 is configured such that the plurality of nozzles 120 is separately manufactured and then is disposed and coupled to the exterior means. However, the plurality of nozzles 120 may be formed integrally with the exterior means as illustrated in FIG. 9. That is, the plurality of nozzles 120 is formed as an integrated part of the lower plate 115 by forming a hole in the lower plate 115 in a state in which a portion of the lower plate 115 further protrudes outwardly through a burring process when the lower plate 115 is press formed in an embossed shape. When the plurality of nozzles 120 is configured as the integral part of the lower plate 115 in this manner, there is no need to mount a separate plug for manufacturing a separate nozzle, so that there are effects that manufacturing cost is reduced and thickness is reduced. Meanwhile, as illustrated in FIG. 9, it is preferable that a thread tap is processed on an inner surface of each of the plurality of nozzles 120 so as to further strengthen a coupling force between the plurality of sealing covers 130 of the fusible alloy and the inner surface of each of the plurality of nozzles 120 so that the plurality of sealing covers 130 withstands a higher discharge pressure of the fire extinguishing agent.

The chamber of this embodiment is configured such that the upper and lower plates 111 and 115 are welded to each other along the borders thereof so that the chamber has the interior space. Furthermore, in a state in which the end portions of each of the plurality of forming parts 112 and 116 that are respectively formed in the upper and lower plates 111 and 115 are brought into close contact with each other, the upper and lower plates 111 and 115 are welded to each other along the borders of the forming parts 112 and 116 so that the upper and lower plates 111 and 115 are integrated with each other and the interior space are formed therebetween. As such, welding performed along the borders of the forming parts 112 and 116 so as to integrate the upper and lower plates 111 and 115 to each other is performed so as to allow the interior space of the chamber to sufficiently withstand such an internal pressure since the interior space of the chamber has a predetermined internal pressure (for example, 5 kg/cm² to 15 kg/cm²).

Meanwhile, the predetermined amount of fire extinguishing agent is filled in the interior space of the chamber so that the fire extinguishing agent has the predetermined discharge pressure. At this time, in order to embed the fire extinguishing agent so that the fire extinguishing agent has the predetermined discharge pressure, the interior space of the chamber is filled with compressed air or nitrogen gas. That is, an injection part 113 in communication with the interior space of the chamber is formed. For example, the injection part 113 is formed in one region of a first side of the upper plate 111. Then, in a state in which vacuum is applied to the interior space of the chamber through the injection part 113, the predetermined amount of fire extinguishing agent is filled in the interior space of the chamber by the vacuum pressure, and then compressed air or nitrogen gas is filled in the interior space of the chamber, so that a state in which the fire extinguishing agent having the predetermined discharge pressure is filled in the interior space of the chamber is realized. Therefore, when the outlet of each of the plurality of nozzles 120 is opened, the fire extinguishing agent is sprayed toward the battery by the discharge pressure thereof. Meanwhile, the fire extinguishing agent is a chemical agent which causes thermal decomposition by reacting with a flame and which extinguishes a fire by a suppressing effect, a suffocation effect, and a cooling effect due to a material generated by the reaction, and it is preferable that the fire extinguishing agent is embedded in the interior space of the chamber such that the discharge pressure (internal pressure) of the fire extinguishing agent is 5 kg/cm² to 15 kg/cm².

When the plate-type fire extinguishing device 100 of this embodiment is mounted in a state in which the plate-type fire extinguishing device 100 is brought into close contact with the battery, the plate-type fire extinguishing device 100 may serve to dissipate heat generated from the battery. Therefore, it is preferable to use the fire extinguishing agent that is a chemical agent having a characteristic of dissipating heat generated in the battery through a repetitive process in which the chemical agent evaporates and condenses by heat generated from the battery. Particularly, in order for the fire extinguishing agent has an evaporative latent heat cooling effect, it is preferable to use a chemical agent having a characteristic of being easily evaporated even at a low temperature, and it is more preferable to use fluorinated ketone (C₆F₁₂O) or fluorine-based ketone (FK-5-1-12, dodecafluoro-2-methylpentan-3-one) having an insulation characteristic.

In this embodiment, the exterior means 110 is configured as one chamber, but may be configured as a plurality of chambers having respective interior spaces that are sealed and partitioned from each other. At this time, the number of chambers may be variously changed according to the application environment.

The plate-type fire extinguishing device 100 of this embodiment configured as described above is capable of extinguishing an initial fire when the fire occurs in the battery. That is, when the temperature of the battery is increased due to the occurrence of a fire in the battery, the temperature of the plurality of nozzles 120 at a region closest to the battery where the fire occurs increases, the fusible alloy that has been sealing the outlet of each of the plurality of nozzle 120 is melted and the outlet of each of the plurality of corresponding nozzles 120 is opened, and the fire extinguishing agent embedded in the interior space of the chamber is sprayed toward the battery through the open outlet with the predetermined discharge pressure, so that the initial fire of the battery where the fire occurs is capable of being extinguished.

Meanwhile, the plate-type fire extinguishing device 100 of this embodiment may be configured such that the plate-type fire extinguishing device 100 is further provided with a pressure gauge 140 configured to measure a pressure inside the chamber. In addition, the plate-type fire extinguishing device 100 of this embodiment may be configured such that the plate-type fire extinguishing device 100 is used in communication with a tank in which a separate fire extinguishing agent is stored so that the fire extinguishing agent stored inside the chamber and the fire extinguishing agent stored in the tank are capable of being sprayed toward a region where a fire occurs, thereby being capable of realizing a more efficient fire extinguishing. Here, the tank has a structure in which a predetermined amount of fire extinguishing agent is filled therein so that the tank has a predetermined pressure equal to that of the interior space of the chamber. At this time, in order to embed the fire extinguishing agent so that the fire extinguishing agent has the predetermined pressure, an interior space of the tank is filled with compressed air or nitrogen gas.

The plate-type fire extinguishing device 100 of this embodiment configured as described above may be disposed in a form in which the plate-type fire extinguishing device 100 is in contact with or positioned adjacent to a battery of such as an electric vehicle, an ESS, and so on, and may be used to extinguish a fire when a fire occurs in the battery. Meanwhile, a battery module (including a battery rack) of such as an electric vehicle, an ESS, and so on may include a battery provided with a plurality of battery cells stacked on each other, and may include a casing configured to surround at least a portion of an outer surface of the battery. Therefore, the battery module (including the battery rack) of this embodiment is configured such that the plate-type fire extinguishing device 100 is disposed between the battery and the casing, and is configured such that the plate-type fire extinguishing device 100 is disposed in a form in which the plate-type fire extinguishing device 100 is in contact with or positioned adjacent to the battery. At this time, the plate-type fire extinguishing device 100 may be configured in a form in which the plate-type fire extinguishing device 100 is supported or fixed to the casing and so on. Meanwhile, the battery module of this embodiment may also be used as a battery pack that has a large battery capacity.

A casing of a general battery module may accommodate a battery therein, has a casing body having a first side thereof opened, and has a casing cover configured to open and close the open first side of the casing body. Furthermore, the casing cover may be configured as the plate-type fire extinguishing device 100 configured as described above.

The features of the plate-type fire extinguishing device and the battery module including the plate-type fire extinguishing device of the present disclosure have been described above with reference to the accompanying drawings, but they are just preferable examples. Therefore, it is apparent to those skilled in the art that the present disclosure is not limited to the embodiments and may be modified in various ways without departing from the spirit and scope of the present disclosure, so it should be understood that those modifications and changes are included in claims of the present disclosure.

[Description of Reference Numerals]
100: plate-type fire extinguishing device 110: exterior means
111: upper plate 112, 116: forming part
113: injection part 115: lower plate
117: hole 118: accommodating groove
120: nozzle 130: sealing cover
140: pressure gauge

### Industrial Applicability

The plate-type fire extinguishing device according to the present disclosure is disposed in a form in which the plate-type fire extinguishing device is in contact with or positioned adjacent to a battery of such as an electric vehicle, an Energy Storage System (ESS), and so on, and is used for extinguishing a fire when a fire occurs in the battery.

## Claims

1. A plate-type fire extinguishing device capable of extinguishing a fire by spraying a fire extinguishing agent onto an area where a fire occurs when a fire occurs in a battery, the plate-type fire extinguishing device comprising:
an exterior means having at least one chamber which is sealed such that the chamber has an interior space having a predetermined capacity and which is formed in a plate shape having a predetermined width;
the fire extinguishing agent with a predetermined amount filled in the interior space of the chamber at a predetermined pressure;
a plurality of nozzles formed integrally with the exterior means or disposed and coupled to the exterior means so that the plurality of nozzles is in communication with the interior space of the chamber in at least one direction; and
a plurality of sealing covers which is formed of a fusible alloy filled inside the plurality of nozzles so as to seal the plurality of nozzles and which is configured to be melted at a predetermined temperature due to the fire that occurs in the battery, thereby allowing the fire extinguishing agent to be sprayed onto the battery through the plurality of nozzles,
wherein the fusible alloy is configured such that the fire extinguishing agent is discharged at a predetermined discharge pressure through the nozzles that are first molten, thereby extinguishing the fire.

2. The plate-type fire extinguishing device of claim 1, wherein the exterior means comprises an upper plate and a lower plate which are respectively formed along borders thereof and which are welded and coupled to each other along the borders thereof, thereby forming the interior space with the predetermined capacity,
wherein the upper and lower plates are respectively provided with a plurality of forming parts that are formed such that the forming parts protrude inwardly so that the forming parts are brought into surface contact with each other when the upper and lower plates are brought into close contact with each other,
wherein the lower plate is further provided with a plurality of holes which is respectively in communication with an outlet of each of the plurality of nozzles or into which a body of each of the plurality of nozzles is respectively inserted thereinto and is capable of being fixed thereto, and
wherein a tap or a tapered inclined surface is formed in an inner side surface of the outlet of each of the plurality of nozzles, so that the plurality of sealing covers which is in a solid state and which seals the outlet of each of the plurality of nozzles is prevented from being separated from the outlet due to the discharge pressure of the fire extinguishing agent.

3. The plate-type fire extinguishing device of claim 2, wherein, when the plurality of holes is configured such that the plurality of holes is respectively in communication with the outlet of each of the plurality of nozzles, a plurality of accommodating grooves is further provided around the plurality of holes so that an end portion of each of the plurality of nozzles is coupled to the plurality of holes while the plurality of nozzles is in a state in which the plurality of nozzles is fitted to the plurality of holes.

4. The plate-type fire extinguishing device of claim 2, wherein the body of each of the plurality of nozzles has a stepped shape so that the body of each of the plurality of nozzles is welded and coupled to the plurality of holes while being in a close contact with a circumference of each of the plurality of holes in a state in which the body of each of the plurality of nozzles is fitted to the plurality of holes.

5. The plate-type fire extinguishing device of claim 1, wherein the exterior means comprises an upper plate and a lower plate which are respectively formed along borders thereof and which are welded and coupled to each other along the borders thereof, thereby forming the interior space with the predetermined capacity,
wherein the upper and lower plates are respectively provided with a plurality of forming parts that are formed such that the forming parts protrude inwardly so that the forming parts are brought into surface contact with each other when the upper and lower plates are brought into close contact with each other,
wherein each of the plurality of nozzles is formed as an integrated part of the lower plate by forming holes in the lower plate in a state in which a portion of the lower plate further protrudes outwardly, and
wherein a coupling force between the plurality of sealing covers formed of the fusible alloy and an inner surface of each of the plurality of nozzles is further reinforced by processing a thread tap in the inner surface of each of the plurality of nozzles.

6. The plate-type fire extinguishing device of claim 1, wherein the predetermined discharge pressure of the fire extinguishing agent is formed by filling the interior space of the chamber with compressed air or nitrogen gas.

7. The plate-type fire extinguishing device of claim 6, wherein the plate-type fire extinguishing device is further provided with a pressure gauge configured to measure an internal pressure of the chamber, or is configured such that the plate-type fire extinguishing device is used by being connected to a tank in which a separate fire extinguishing agent is stored.

8. The plate-type fire extinguishing device of claim 6, wherein the fire extinguishing agent is fluorinated ketone (C₆F₁₂O) or fluorine-based ketone (FK-5-1-12, dodecafluoro-2-methylpentan-3-one), and the discharge pressure of the fire extinguishing agent is 5 kg/cm² to 15 kg/cm².

9. The plate-type fire extinguishing device of claim 1, wherein the fusible alloy is melted at 60 degrees Celsius to 130 degrees Celsius.

10. The plate-type fire extinguishing device of claim 1, wherein the exterior means has a plurality of chambers having respective interior spaces that are sealed and partitioned from each other.

11. A battery module which comprises a battery provided with a plurality of battery cells stacked on each other and which comprises a casing formed such that the casing surrounds at least a portion of an outer surface of the battery, the battery module comprising:
the plate-type fire extinguishing device described in any one claim selected from claim 1 to claim 10, the plate-type fire extinguishing device being disposed in a form in which the plate-type fire extinguishing device is brought into contact with the battery or is positioned adjacent to the battery.

12. The battery module of claim 11, wherein the casing comprises a casing body in which the battery is capable of being accommodated and which has a first side thereof opened, comprises a casing cover configured to open and close the open first side of the casing body, and the casing cover is configured as the plate-type fire extinguishing device.
